# EUROPÄISCHE PATENTANMELDUNG

(11) **EP 2 169 383 A1**
(43) Veröffentlichungstag der Anmeldung: **31.03.2010**
(21) Anmeldenummer: 09015283.6
(22) Anmeldetag: 10.06.2002
(51) Int. Cl.: G01N 21/05, B01L 3/00

(54) **Körper für Durchflussküvetten und deren Verwendung**

(30) Priorität: 15.06.2001 CH 10892001
(62) Teilanmeldung aus: 02732307.0
(71) Anmelder: Bayer Technology Services GmbH, 51368 Leverkusen (DE)
(72) Erfinder: Bopp, Martin, 4053 Basel (CH); Büttgen, Heinrich, 79189 Bad Krozingen (DE); Callenbach, Tilo, 8645 Jona (CH); Schoch, Werner, 8600 Dübendorf (CH); Marmier, Yves, 2300 La Chaux-de-Fonds (CH); Wicky, André, 1588 Cudrefin (CH)

(57) **Zusammenfassung**

Eine Anordnung von Durchflussküvetten wird durch Zusammenfügen eines Körpers (11) mit einer Grundplatte gebildet. Zur Bildung einer Anordnung von Durchflussküvetten durch Zusammenfügung des Körpers (11) mit einer Grundplatte (31), weist der Körper (11) auf:
mindestens ein Durchflussküvettenteil (18) mit einem Zulauf (12) und einem Ablauf (17) umfasst,
wobei der Durchflussküvettenteil (18) so ausgebildet ist, dass beim Zusammenfügen des Körpers (11) mit der Grundplatte (31) ein Innenraum (13) mit einer Einlassöffnung (14) und mit einer Auslassöffnung (17) gebildet wird, welcher Innenraum (13) den Zulauf (12) und den Ablauf (17) fluidisch verbindet, und
wobei der Zulauf (12) im Wesentlichen trichterförmig ausgebildet ist und nahe bei der Grundplatte (31) in die Einlassöffnung (14) übergeht, so dass bei der Befüllung der Durchflussküvette (11, 31) insbesondere mittels einer Pippette, die Spitze der Pippette nahe zur Grundplatte (31) geführt werden kann.

## Beschreibung

Die Erfindung betrifft einen Körper zur Bildung einer Anordnung von Durchflussküvetten gemäss Oberbegriff des Anspruchs 1 oder 3.

Die Erfindung betrifft weiter einen Träger gemäss Oberbegriff des Anspruchs 9 sowie die Anordnung von Durchflussküvetten.

Eine Anordnung von Durchflussküvetten der oben erwähnten Art ist in der Internationalen Patentanmeldung PCT/EP 00/12668 beschrieben.

Figuren 24-28 zeigen Ausführungsformen, die in der Internationalen Patentanmeldung PCT/EP 00/12668 beschrieben sind.

Figur 24 ist mit der Figur 1 der Patentanmeldung PCT/EP 00/12668 identisch und zeigt eine Querschnitts-Teilansicht einer ersten Durchflussküvettenanordnung. Aus dieser Figur sind der Zulauf 1 und der Ablauf 2 einer einzelnen Durchflussküvette sowie Teile der benachbarten Durchflussküvetten ersichtlich.

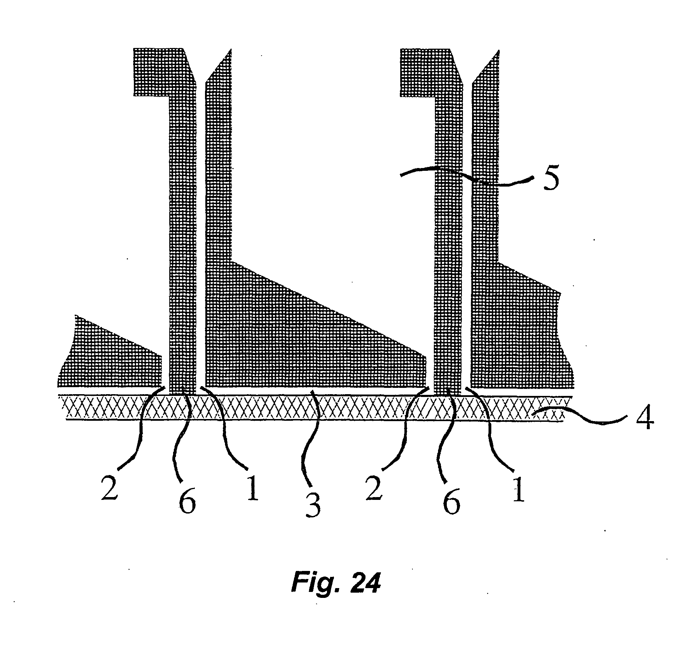

Die Durchflussküvettenanordnung gemäss Fig. 24 umfasst eine Grundplatte 4 und einen damit zusammengebrachten Körper 6. Der Körper 6 besitzt eine Ausnehmung 3, welche nach Zusammenfügen des Körpers 6 mit der Grundplatte 4 eine räumliche Aussparung zur Erzeugung einer Durchflussküvette mit Zulauf 1 und Ablauf 2 bildet. Die Ausnehmung 3 kann eine beliebige Grundfläche haben; beispielsweise kann sie rechteckig sein. Vorzugsweise sind Ecken jeweils abgerundet. Der Ablauf 2 bzw. der Zulauf 1 der in Querschnittsrichtung benachbarten Durchflussküvetten sind ebenfalls dargestellt. Vorzugsweise sind der Zulauf und der Ablauf einer Durchflussküvette jeweils an einander gegenüberliegenden Endpunkten der Grundflächen der Ausnehmung, im Falle einer im wesentlichen rechteckförmigen Grundfläche beispielsweise an den Endpunkten der Diagonalen, angeordnet.

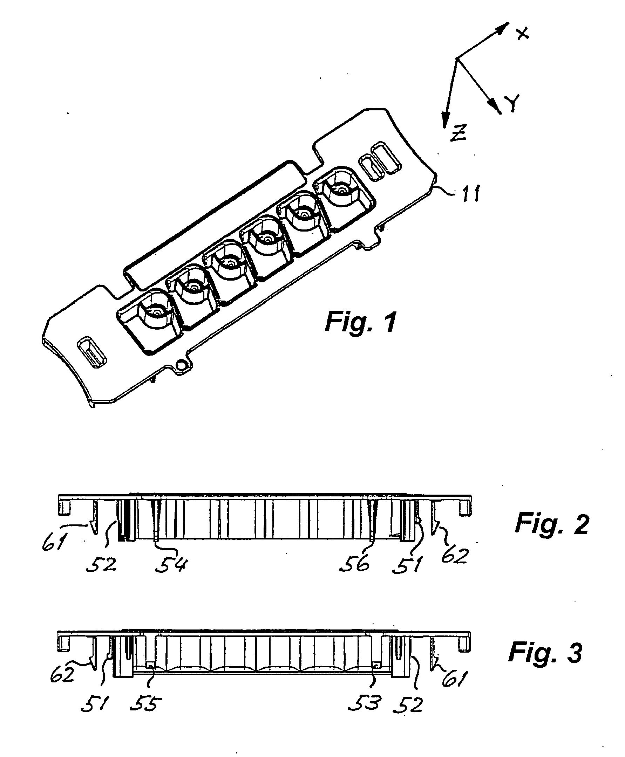

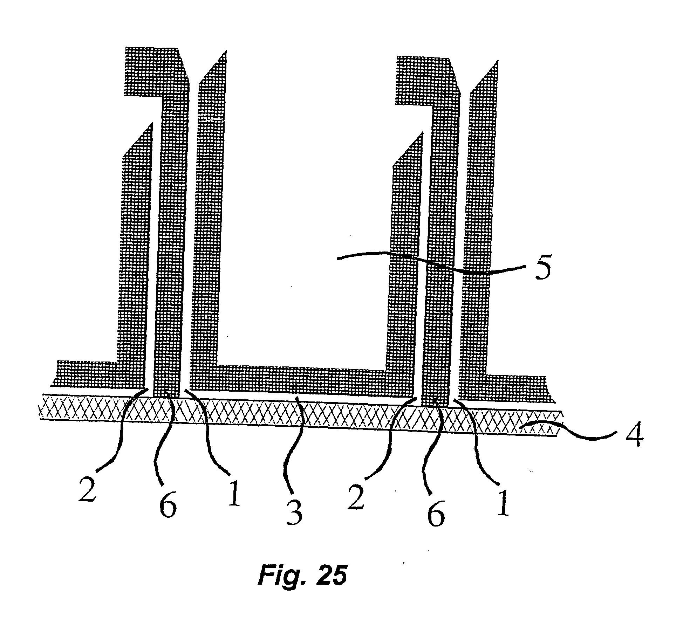

Figur 25 ist mit der Figur 2 der Patentanmeldung PCT/EP 00/12668 identisch und zeigt eine Querschnitts-Teilansicht von einer anderen Ausführungsform der Durchflussküvettenanordnung gemäss Fig. 24. In der Ausführungsform gemäss Fig. 25 ist das Reservoir 5 als eine Vertiefung in der Aussenwand des mit der Grundplatte 4 zusammengebrachten Körpers 6 ausgebildet. Diese Ausführungsform ermöglicht es, dass aus der Durchflussküvette austretende Flüssigkeit zwar in das Reservoir 5 eintreten, aber nicht wieder in die Durchflussküvette zurückfliessen kann, solange das Reservoir nicht bis zu der Oberkante der Berandung an der Flüssigkeitsaustrittsseite aufgefüllt ist.

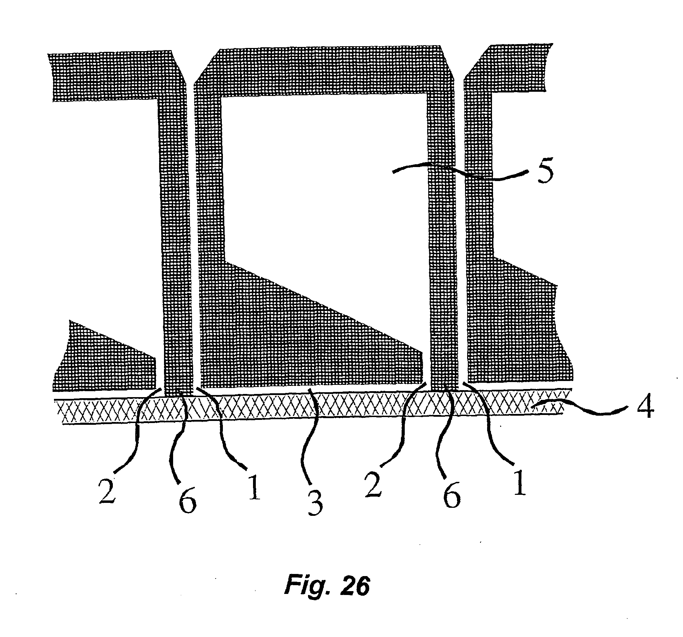

Figur 26 ist mit der Figur 3 der Patentanmeldung PCT/EP 00/12668 identisch und zeigt eine Querschnitts-Teilansicht von einer weiteren Ausführungsform der Durchflussküvettenanordnung gemäss Fig. 24. In der Ausführungsform gemäss Fig. 26 ist das Reservoir 5 nach oben abgeschlossen. Diese Ausführungsform hat zur Folge, dass auch aus dem Reservoir 5 keine Flüssigkeit durch Verdunsten entweichen kann.

Der Körper 6 kann in allen oben erwähnten Ausführungsformen aus einem Teil oder auch aus mehreren Teilen bestehen, welche vorzugsweise irreversibel zu einer Einheit zusammengefügt werden.

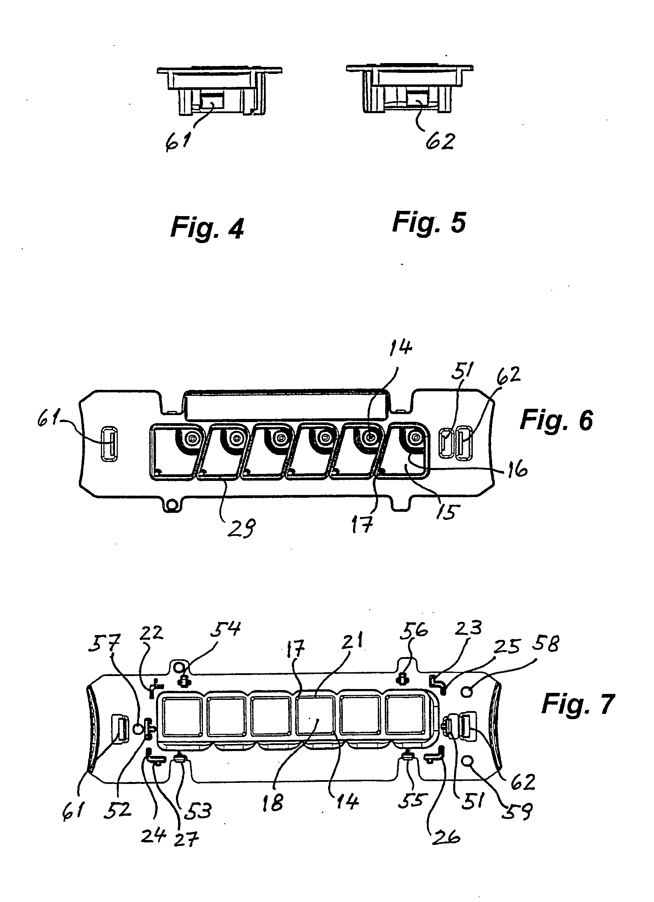

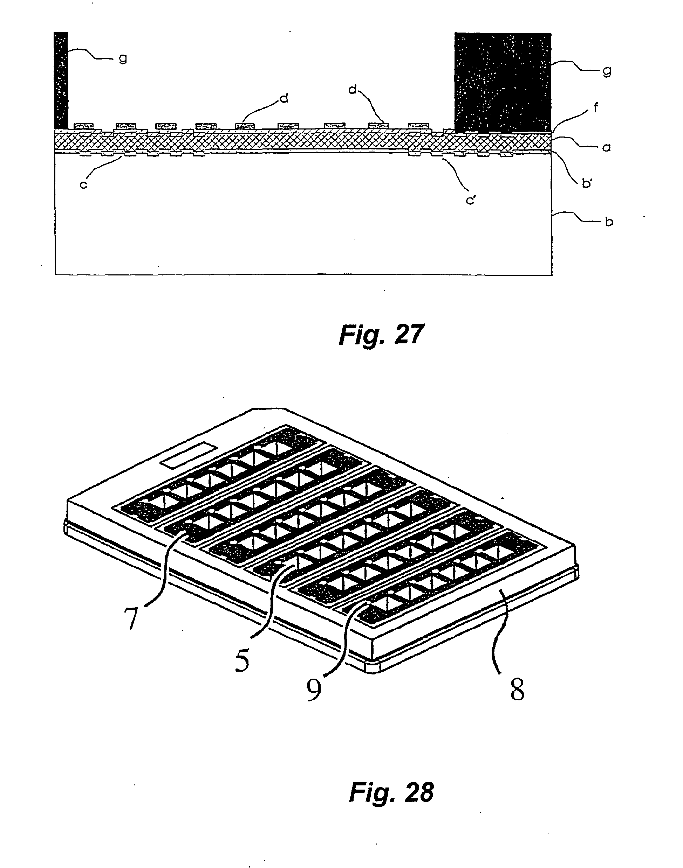

Figur 27 ist mit der Figur 4 der Patentanmeldung PCT/EP 00/12668 identisch und zeigt eine im wesentlichen auf die Grundplatte beschränkte Querschnitts-Teilansicht für eine Ausführungsform mit einem optischen Schichtwellenleiter als Grundplatte. In der Ausführungsform gemäss Fig. 27 ist die Grundplatte als ein optischer Schichtwellenleiter mit darauf immobilisierten biologischen oder biochemischen oder synthetischen Erkennungselementen ausgebildet. Gemäss Fig. 27 umfasst dieser Schichtwellenleiter Schichten a, b und b'. Mit dem Bezugszeichen g sind in Fig. 27 die Begrenzungen einer Durchflussküvette bezeichnet, welche durch Zusammenbringen der Grundplatte mit einem Körper 6 erzeugt wird. Das Bezugszeichen g entspricht daher dem Bezugszeichen 6 in den Figuren 24 bis 26.

Auf einer zumindest in einem Teil des sichtbaren oder nahen infraroten Spektrums transparenten Schicht b ist zunächst eine dünne Zwischenschicht b' und anschliessend eine Schicht a aufgebracht, deren Brechungsindex grösser als die Brechungsindices der Schichten b und b' ist. Auch die Schichten a und b' sind mindestens in einem Teil des sichtbaren oder nahen infraroten Spektrums optisch transparent. In der Schicht b sind Gitterstrukturen c und c' als Reliefgitter ausgebildet, welche bei der Aufbringung der darüber befindlichen Schichten in diese übertragen werden. Auf die Schicht a wird dann eine Haftvermittlungsschicht (f) aufgebracht, welche die Haftung zu immobilisierender biologischer oder biochemischer oder synthetischer Erkennungselemente verbessern kann. In dieser Ausführungsform sind diese Erkennungselemente in räumlich getrennten Messbereichen d immobilisiert, welche in dieser Ausführungsform sowohl auf als auch zwischen den Gitterstrukturen c und c' angeordnet sind. In der Ausführungsform gemäss Fig. 27 wird abschliessend die Grundplatte mit dem Körper g zusammengebracht, welcher dem Körper 6 in den Figuren 24 bis 26 entspricht.

Figur 28 ist mit der Figur 5 der Patentanmeldung PCT/EP 00/12668 identisch und zeigt eine Anordnung von Durchflussküvettenanordnungen, in der spaltenförmige Anordnungen von Grundplatten 4 und den jeweils damit zusammengebrachten Körpern 6 zusammen Einsatzblöcke 7 bilden, welche in entsprechende Aufnahmeöffnungen eines gemeinsamen Trägers 8 (Metaträger) eingesetzt sind. Auf diese Weise wird eine Anordnung von insgesamt 6 Spalten von je 6 Durchflussküvetten erzeugt. In der Ausführungsform gemäss Fig. 28 hat der Träger die Grundabmessungen einer Standard-Mikrotiterplatte. Die Einlassöffnungen 9 zu den Zuläufen 1 (in dieser Figur nicht erkennbar) sind so positioniert, dass sie mit dem Raster einer 96-er Standard-Mikrotiterplatte kompatibel sind, d.h., sie sind in Abständen von jeweils einem ganzzahligen Vielfachen von 9 mm positioniert (zum Beispiel: Abstand der Zuläufe innerhalb einer Spalte: 9 mm; Abstand der Zuläufe zwischen benachbarten Spalten: 18 mm). Bei entsprechender Translation des Trägers mit den Einsatzblöcken sind entsprechend die Reservoirs 5 mit dem Raster einer standardmässigen 96-er Mikrotiterplatte kompatibel. In der Ausführungsform gemäss Fig. 28 ist der Träger 8 so gestaltet, dass er bis zu 6 Einsatzblöcke aufnehmen kann. Es können jedoch auch Plätze für Einsatzblöcke unbesetzt bleiben.

Eine sehr genaue Positionierung der Durchflussküvettenanordnung in einem Träger ist unentbehrlich, um die Zuverlässigkeit und die Genauigkeit der durchgeführten Messungen, beispielsweise optischen, elektro-optischen oder elektrischen Messungen, sicherzustellen.

Der Erfindung liegt daher die Aufgabe zugrunde, eine Durchflussküvettenanordnung der oben erwähnten Art zur Verfügung zu stellen, die so ausgestaltet ist, dass sie mit erhöhter Präzision in einem Träger positionierbar ist, der in ein Analysengerät eingegeben wird und dort seinerseits hochpräzise positionierbar ist und automatisch bearbeitet wird, wobei die Bearbeitung die Durchführung von Messungen, beispielsweise optischen, elektro-optischen oder elektrischen Messungen, an einer relativ grossen Zahl von sehr kleinen Messbereichen, die dicht nebeneinander liegen, umfasst.

Der Erfindung liegt ferner die Aufgabe zugrunde, einen Körper zur Bildung einer Anordnung von Durchflussküvetten zur Verfügung zu stellen, welcher
- die Verwendung üblicher, kommerziell erhältlicher Pipettenspitzen für die Zufuhr der Proben oder Reagenzien zu den Küvetten ermöglicht und
- kleinere Volumina der Proben bzw. Reagenzien erfordert.

Gemäss einem ersten Aspekt der Erfindung wird die erstgenannte Aufgabe mit einem Körper gemäss Anspruch 1 gelöst.

Gemäss einem zweiten Aspekt der Erfindung wird die erstgenannte Aufgabe mit einer Durchflussküvettenanordnung gemäss Anspruch 6 gelöst.

Gemäss einem dritten Aspekt der Erfindung wird die erstgenannte Aufgabe mit einem Träger gemäss Anspruch 9 gelöst.

Gemäss einem vierten Aspekt der Erfindung wird die erstgenannte Aufgabe mit einer Durchflussküvettenanordnung gemäss Anspruch 11 gelöst.

Gemäss einem fünften Aspekt der Erfindung wird die erstgenannte Aufgabe mit einer Durchflussküvettenanordnung gemäss Anspruch 12 gelöst.

Gemäss einem sechsten Aspekt der Erfindung wird die zweitgenannte Aufgabe durch einen Körper gemäss Anspruch 3 gelöst.

Die weitere Ansprüche geben bevorzugte Ausführungsformen sowie die Verwendung eines Körpers gemäss einem der Ansprüche 1-5, einer Anordnung von Durchflussküvetten gemäss einem der Ansprüche 6-8, 11-14 oder eines Trägers gemäss Anspruch 9 oder 10.

Die erfindungsgemässe Ausführungsform bzw. Anordnung ermöglicht eine hochpräzise Positionierung einer Anordnung von Durchflussküvetten der eingangs erwähnten Art mithilfe mechanischer Positionierhilfen, wobei die erzielbare Genauigkeit der Positionierung in der Grössenordnung von 50 Mikrometer liegt und überraschenderweise keinerlei Justierungen vorgenommen werden müssen.

Das bevorzugte Einsatzgebiet der erfindungsgemässen Durchflussküvettenanordnung ist die gleichzeitige (parallele) Bestimmung einer Vielzahl von Analyten in einer oder mehreren Proben. Dieses kann dadurch geschehen, dass in den Probenbehältnissen, mit der Grundplatte in einer Ausführungsform als Sensorplattform, jeweils sogenannte "Microarrays" untergebracht sind.

Die erfindungsgemässen Durchflussküvettenanordnung ist bei allen analytischen Messverfahren verwendbar, die in der oben genannten Patentanmeldung PCT/EP 00/12668 beschrieben oder erwähnt sind.

Weitere Vorteile der Erfindung gehen aus der nachstehenden Beschreibung von bevorzugten Ausführungsbeispielen hervor.

Figuren 1 bis 7 zeigen verschiedene Ansichten einer Ausführungsform eines erfindungsgemässen Körpers zur Bildung einer geradlinigen Reihe - also einer eindimensionalen Anordnung - von Durchflussküvetten.
- Fig. 1: zeigt eine perspektivische Ansicht des Körpers von oben,
- Fig. 2: zeigt die Vorderansicht nach Fig. 1,
- Fig. 3: zeigt die Ansicht von hinten nach Fig. 1,
- Fig. 4: zeigt die Ansicht von der linken Seite nach Fig. 1,
- Fig. 5: zeigt die Ansicht von der rechten Seite nach Fig. 1,
- Fig. 6: zeigt die Ansicht von oben nach Fig. 1,
- Fig. 7: zeigt die Ansicht von unten nach Fig. 1.

Figuren 8 bis 15 zeigen verschiedene Ansichten einer Ausführungsform einer erfindungsgemässen Durchflussküvettenanordnung, die durch Zusammenfügung eines Körpers gemäss Figuren 1 bis 7 und einer Grundplatte gebildet wird.

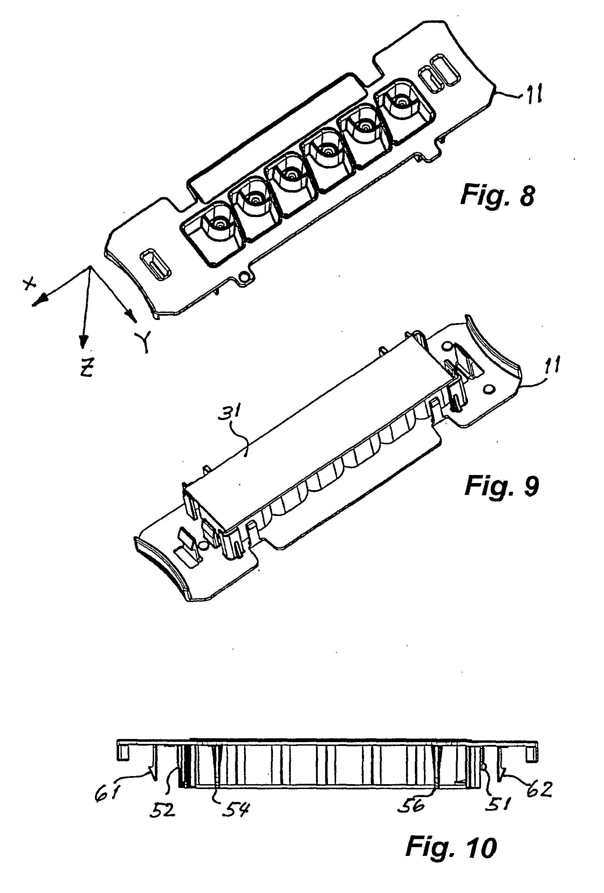

- Fig. 8: zeigt eine perspektivische Ansicht der Durchflussküvettenanordnung von oben,
- Fig. 9: zeigt eine perspektivische Ansicht der Durchflussküvettenanordnung von unten,
- Fig. 10: zeigt die Vorderansicht nach Fig. 8,

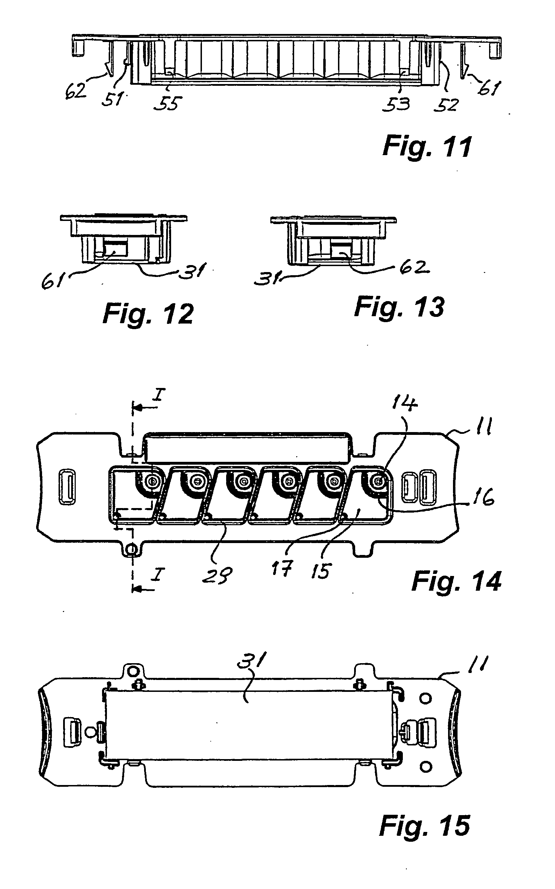

- Fig. 11: zeigt die Ansicht von hinten nach Fig. 8,
- Fig. 12: zeigt die Ansicht von der linken Seite nach Fig. 8,
- Fig. 13: zeigt die Ansicht von der rechten Seite nach Fig. 8,

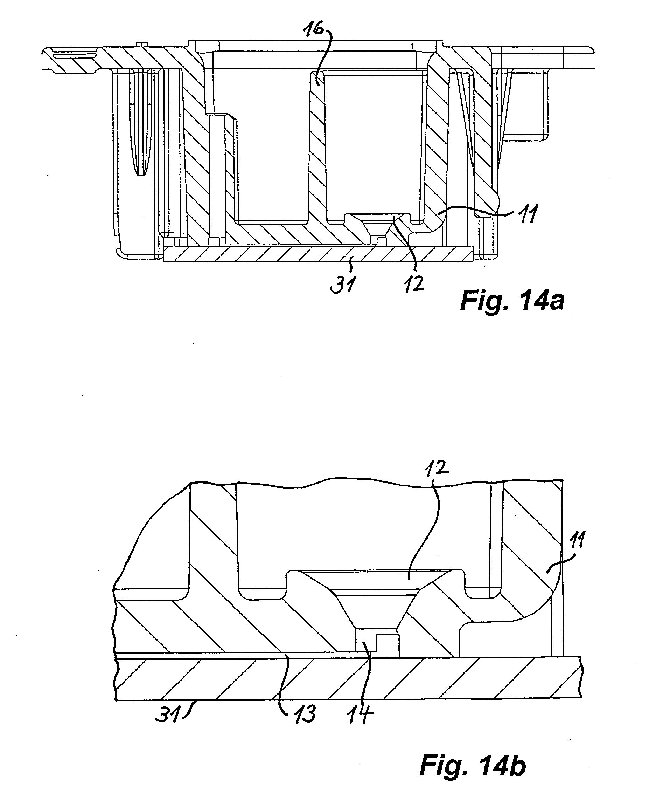

- Fig. 14: zeigt die Ansicht von oben nach Fig. 8,
- Fig. 14a: zeigt einen Teilquerschnitt durch die Ebene I-I in Fig. 14
- Fig. 14b: zeigt eine Vergrösserung des in Fig. 14 eingekreisten Teils
- Fig. 15: zeigt die Ansicht von unten nach Fig. 8.

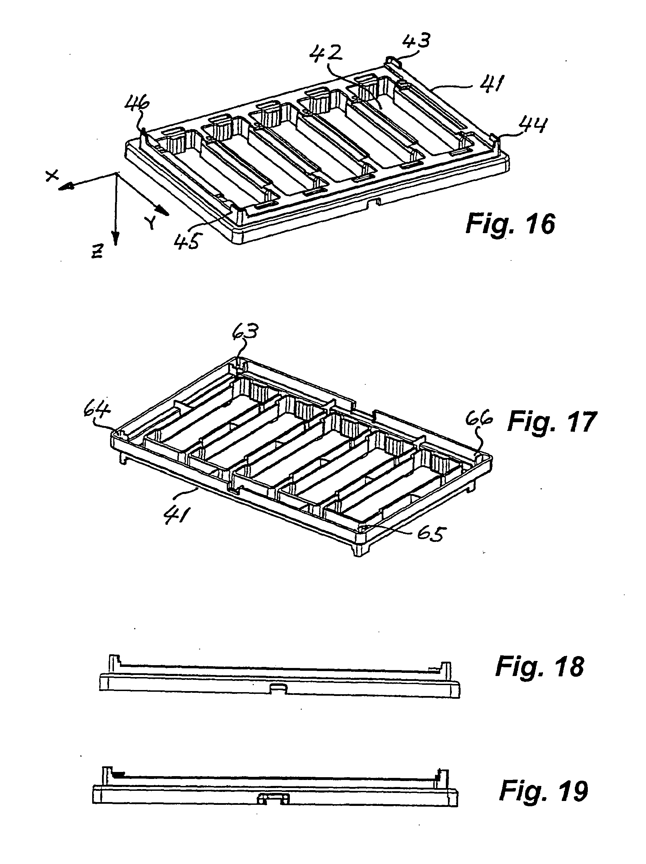

Figuren 16 bis 23 zeigen verschiedene Ansichten einer Ausführungsform eines erfindungsgemässen Trägers zur Aufnahme einer Durchflussküvettenanordnung oder mehrerer Durchflussküvettenanordnungen gemäss Figuren 8-15.
- Fig. 16: zeigt eine perspektivische Ansicht des Trägers von oben,
- Fig. 17: zeigt eine perspektivische Ansicht des Trägers von unten,
- Fig. 18: zeigt die Vorderansicht nach Fig. 16,
- Fig. 19: zeigt die Ansicht von hinten nach Fig. 16,

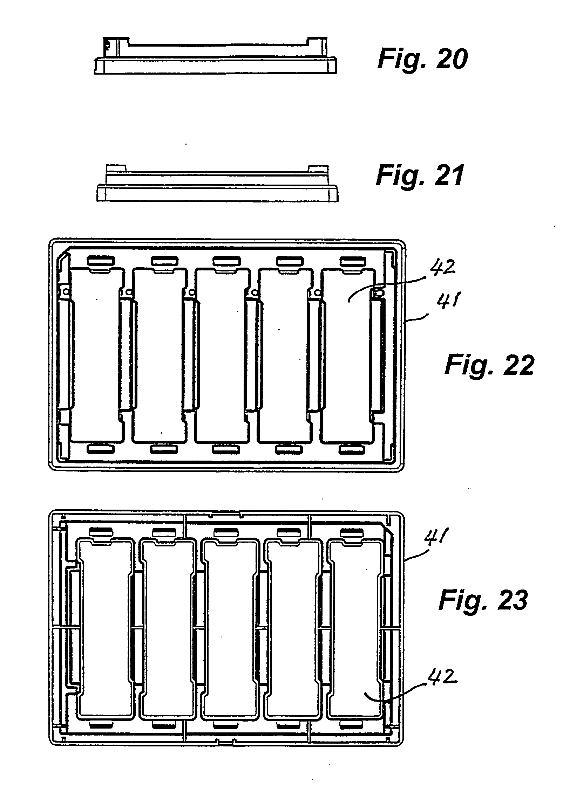

- Fig. 20: zeigt die Ansicht von der linken Seite nach Fig.-16
- Fig. 21: zeigt die Ansicht von der rechten Seite nach Fig. 16,
- Fig. 22: zeigt die Ansicht von oben nach Fig. 16,
- Fig. 23: zeigt die Ansicht von unten nach Fig. 16.

Figuren 24-28 zeigen Ausführungsformen, die in der Internationalen Patentanmeldung PCT/EP 00/12668 beschrieben und darin als Figuren 1-5 enthalten sind.

Nachstehend werden anhand der Figuren 1-23 bevorzugte Ausführungsbeispiele der Erfindung beschrieben. Sie sind das Ergebnis einer Weiterentwicklung von Ausführungsformen, die in ihren Grundzügen in der Internationalen Patentanmeldung PCT/EP 00/12668 beschrieben sind. Der Inhalt dieser Patentanmeldung wird daher hiermit durch Bezugnahme vollumfänglich als Bestandteil der nachstehenden Beschreibung eingeführt.

Wie nachfolgend genauer beschrieben, dient eine ein- oder zweidimensionale Anordnung von Durchflussküvetten als Bestandteil eines Arrays von Probenbehältnissen,
wobei die Anordnung aus einer Grundplatte und einem damit zusammengebrachten Aufsatzkörper gebildet ist, welcher eine Anordnung von räumlichen Aussparungen hat, die der Anordnung der Probenbehältnisse entspricht,
wobei für jedes Probenbehältnis mindestens ein Zu- und Ablauf vorhanden ist, und
wobei die Grundplatte z.B. ein Glasplättchen, Wellenleiter-Plättchen oder eine Sensorplattform sein kann.

Die ein- oder zweidimensionale Anordnung von Durchflussküvetten ermöglicht es in einer bevorzugten Ausführungsform, auch sehr geringe Proben- oder Reagentienmengen den Probenbehältnissen, welche in einer hohen Anzahl auf einer kleinen Grundfläche angeordnet sein können, zuzuleiten und/oder von ihnen abzuführen, wobei für jedes Probenbehältnis mindestens ein Reservoir zur Aufnahme von dem Probenbehältnis abzuführender Flüssigkeit und ein peripheres System von Flüssigkeitszu- und -abführungen in die Anordnung integriert ist.

### 1) ERSTES AUSFÜHRUNGSBEISPIEL EINES KÖRPERS ZUR BILDUNG EINER DURCHFLUSSKÜVETTENANORDNUNG

Ein erfindungsgemässer Körper zur Bildung einer geradlinigen Reihe - also einer eindimensionalen Anordnung - von Durchflussküvetten ist in den Figuren 1-7 dargestellt. Eine solche Anordnung von Durchflussküvetten (in den Figuren 8-15 dargestellt) wird durch Zusammenfügung des Körpers 11 mit einer Grundplatte 31 (in den Figuren 1-7 nicht dargestellt) gebildet, die z.B. biologische oder biochemische oder synthetische Erkennungselemente trägt. Diese Erkennungselemente dienen zu Bindung und Nachweis der zu bestimmenden Analyten in zugeführten Proben.

Der Körper 11 hat eine äussere Form, die in eine Aufnahmeöffnung 42 eines Trägers 41 (in Figuren 16-23 dargestellt) passt, d.h. der Körper hat eine äussere Form, welche es ermöglicht, ihn in eine Aufnahmeöffnung des Trägers einzusetzen.

Der Körper 11 weist folgende Elemente auf, die zur genauen Positionierung des Körpers in der Aufnahmeöffnung des Trägers dienen:
(a) eine Feder 51 und einen Anschlag 52, welche zur genauen Positionierung des Körpers in X-Richtung dienen und an entgegengesetzten Endbereichen des Körpers 11 angeordnet sind,
(b) zwei Federn 53, 55 und zwei diesen korrespondierende Anschläge 54, 56, die zur genauen Positionierung des Körpers 11 in Y-Richtung dienen und an entgegengesetzten Seiten des Körpers 11 angeordnet sind, wobei die Y-Richtung senkrecht zur X-Richtung liegt,
(c) drei Auflagepunkte 57, 58, 59 und zwei Schnapphaken 61, 62, wobei diese Auflagepunkte und Schnapphaken gemeinsam zur genauen Positionierung des Körpers in Z-Richtung dienen.

Die Z-Richtung liegt senkrecht zur Ebene, die durch zwei Achsen, nämlich einer Achse in X-Richtung und einer Achse in Y-Richtung, aufgespannt wird.

Die Feder 51 liegt ungefähr gegenüber dem Anschlag 52.

Die Feder 53 (bzw. 55) liegt ungefähr gegenüber dem Anschlag 54 (bzw. 56), aber derart leicht versetzt, dass der äussere Rand des Anschlages in der zur ZY-Ebene parallelen Symmetrieebene der Feder 53 (bzw. 55) liegt.

Die oben erwähnten Positionierungselemente des Körpers 11 ermöglichen, den Körper 11 und somit die damit gebildete Anordnung von Durchflussküvetten ohne jegliche Justierung mit einer Genauigkeit von +/- 50 Mikrometer in jeder der drei zueinander senkrechten Richtungen X, Y und Z in einer Aufnahmeöffnung eines Trägers 41 gemäss Figuren 16-23 zu positionieren.

Die Schnapphaken 61, 62 ermöglichen ein Einsetzen der Anordnung in den Träger durch einen leichten Druck in Z-Richtung und sichern die Anordnung gegen ein Herausfallen aus dem Träger. Die Anordnung ist dabei durch ihre äussere Formgebung so gestaltet, dass ein unrichtiges Einsetzen mechanisch unmöglich ist. Zur Entnahme der Anordnung aus dem Träger genügt ein leichter Gegendruck in Z-Richtung, durch den die Schnapphaken 61,62 leicht nach innen gedrückt werden. Alternativ können die Schnapphaken auch durch Druck von unten mittels eines entsprechend gestalteten Werkzeugs gelöst werden.

Asymmetrisch angebrachte mechanische Positionierhilfen in Form von Ausnehmungen und Laschen des Körpers 11 und des Trägers 41 sowie zusätzliche kreisförmige Ausnehmungen auf einer Hälfte der Laschen des Körpers 11 und des Trägers 41 dienen als optische Positionierhilfe und ermöglichen eine eindeutige Positionierung jeder Durchflussküvettenanordnung im Träger. Eine falsche Positionierung der Anordnungen im Träger ist daher ausgeschlossen.

Wie aus der Fig. 6 und 7 ersichtlich, ist das Raster der von aussen sichtbaren Reservoirs 15 mit den zugehörigen Einlassöffnungen 14 gegenüber dem Raster der Durchflussküvetten 18 derart versetzt, dass sich die Einlassöffnungen 14 zu den Durchflussküvetten jeweils in einer von deren äusseren Ecken befinden.

Zur Erleichterung des Befüllens jeder Durchflussküvette 18 kann die äussere Fläche des Körpers 11 für jede Durchflussküvette eine ganz oder teilweise umlaufende Nut 21 mit einem Querschnitt mit den typischen Abmessungen zwischen 50 x 50 Mikrometer und 500 x 500 Mikrometer haben. In zwei zueinander diagonal gegenüberliegenden Eckpunkten dieser Nut 21 befinden sich die Einlassöffnung 14 bzw. die Auslassöffnung 17 zu jeder Durchflussküvette 18. Diese Nut 21 ermöglicht ein blasenfreies Befüllen der Durchflussküvette. Sofern sich die Entstehung von Luftblasen während des Befüllvorganges oder während der in den Durchflussküvetten durchzuführenden Verfahren zum Nachweis von Analyten nicht grundsätzlich vermeiden lässt, kann sich eine Nut 21 dadurch als vorteilhaft erweisen, indem entstandene Luftblasen aus dem Innenraum 13 der Durchflussküvette entweichen und sich in der Nut 21 sammeln. In einer bevorzugten Ausführungsform wird diese Eigenschaft zusätzlich durch eine chemische Oberflächenbehandlung der Innenfläche der Nut 21 oder der ganzen Innenfläche der Durchflussküvette, einschliesslich besagter Nut, sichergestellt. Diese Behandlung dient zur Schaffung einer hydrophilen, also besser benetzbaren Oberfläche.

Der Körper 11 weist vorzugsweise Anschläge 22, 23, 24 auf, welche zur genauen Positionierung der Grundplatte 31 (siehe Figuren 8-15) in Bezug auf den Körper 11 vor deren Zusammenfügung, z.B. durch Kleben, dienen.
Es besteht keine mechanische Kopplung zwischen den Anschlägen 22, 23, 24 und den oben erwähnten Anschlägen, die zur genauen Positionierung des Körpers 11 bzw. der damit gebildeten Anordnung von Durchflussküvetten in einer Aufnahmeöffnung 42 des Trägers 41 dienen.

Der Körper 11 weist vorzugsweise Schutzwinkel 25, 26, 27 auf, welche die Grundplatte 31 gegen Abreissen oder Beschädigungen schützt, die andernfalls insbesondere beim Einsetzen der Durchflussküvettenanordnung in den Träger 41 eintreten könnten.

In einer bevorzugten Ausführungsform ist auf der Oberseite jeder der Durchflussküvetten ein umlaufender Steg 29 vorgesehen, auf dem eine Folie aufgeschweisst werden kann. Diese Folie verhindert einerseits "cross-contamination" zwischen den Küvetten; sie verhindert andererseits Flüssigkeitsverluste, die sonst insbesondere bei Nukleinsäure-Hybridisierungsassays mit Verfahrensschritten bei erhöhten Temperaturen bis beispielsweise ca. 80°C vorkommen könnten.

Folgende Materialien sind für die Herstellung des Körpers 11 geeignet:
- form-, spritz- oder fräsbare Kunststoffe, thermoplastische Kunststoffe (bevorzugte Herstellung mittels "Injection Molding"), Metalle, Silikate, wie zum Beispiel Glas, Quarz oder Keramiken.

Beispiele für die Materialien zur Herstellung des Körpers 11 sind insbesondere:
- Polycarbonat (PC), z. B. ungefüllt, schwarz eingefärbt
- Polybutylenterephthalat (PBT), z. B. glaskugelgefüllt, schwarz eingefärbt
- "ABS" (Acrylnitril/Butadien/Styrol-Pfropfcopolymer).

Zur Verminderung von Reflexionen ist es vorteilhaft, wenn der Körper 11 der Durchflussküvettenanordnung schwarz eingefärbt ist, sofern nicht ein in der Grundplatte 31 (wenn ausgebildet als Wellenleiter) geführtes Licht unter den die Grundplatte direkt berührenden Wänden des Körpers 11 hindurchgeführt werden soll.

### 2) ZWEITES AUSFÜHRUNGSBEISPIEL EINES KÖRPERS ZUR BILDUNG EINER DURCHFLUSSKÜVETTENANORDNUNG

Dieses Ausführungsbeispiel ist ein erfindungsgemässer Körper zur Bildung einer zweidimensionalen, matrixartigen Anordnung von Durchflussküvetten, die eine Vielzahl von Küvettenreihen mit der Struktur des oben beschriebenen Körpers 11 umfasst und alle oben beschriebenen Elemente oder Elemente mit einer äquivalenten Funktion enthält. Die Merkmale eines solchen Körpers sind daher im wesentlichen aus den Figuren 1-7 ersichtlich.

Ein Körper nach diesem zweiten Ausführungsbeispiel ist auch dazu geeignet, durch Zusammenfügung mit einer Grundplatte, die z.B. biologische oder biochemische oder synthetische Erkennungselemente trägt, eine Durchflussküvettenanordnung zu bilden. Dieser Körper kann beispielsweise selbst schon die äusseren Abmessungen und äusseren Merkmale einer Standard-Mikrotiterplatte nach SBS-Norm haben.

Dieser Körper kann auch eine solche äussere Form haben, die in eine Aufnahmeöffnung eines entsprechend gestalteten Trägers (z. B. mit Aussenabmessungen nach SBS-Norm) passt.

Auch in dieser Ausführungsform kann der Körper folgende Elemente aufweisen, die zur genauen Positionierung des Körpers in der Aufnahmeöffnung des Trägers dienen:
(a) eine Feder und einen Anschlag, welche zur genauen Positionierung des Körpers in X-Richtung dienen und an entgegengesetzten Endbereichen des Körpers angeordnet sind,
(b) zwei Federn und zwei diesen korrespondierende Anschläge, die zur genauen Positionierung des Körpers in Y-Richtung dienen und an entgegengesetzten Seiten des Körpers angeordnet sind, wobei die zweite Richtung senkrecht zur ersten Richtung liegt,
(c) drei Auflagepunkte und zwei Schnapphaken, wobei diese Auflagepunkte und Schnapphaken gemeinsam zur genauen Positionierung des Körpers in Z-Richtung dienen.

Für die Herstellung des Körpers sind die gleichen Materialien verwendbar, die oben unter 1) angegeben sind.

### 3) ERSTES AUSFÜHRUNGSBEISPIEL EINER DURCHFLUSSKÜVETTENANORDNUNG

Eine erste erfindungsgemässe Anordnung von Durchflussküvetten, die eine geradlinige Reihe - also eine eindimensionale Anordnung - von Durchflussküvetten umfasst, ist in den Figuren 8-15 dargestellt. Eine solche Anordnung von Durchflussküvetten wird durch Zusammenfügung des oben anhand der Figuren 1-7 beschriebenen Körpers 11 mit einer Grundplatte 31 gebildet, die z.B. biologische Erkennungselemente trägt. Die Grundplatte 31 und der Körper 11 werden zum Beispiel durch Kleben oder Klippen zusammengefügt.

In einer bevorzugten Ausführungsform ist die Grundplatte 31 dazu geeignet, als Wellenleiter zu dienen.

Aus den Figuren 14, 14a und insbesondere aus Fig. 14b sind folgende vorteilhaften Merkmale der Ausgestaltung des Körpers 11 gemäss den Figuren 1-7 und Figuren 8-15 ersichtlich:

Ganz anders als in der Ausführung gemäss Fig. 25 (Ausführung gemäss Fig. 2 der PCT/EP 00/12668) ist der Zulauf 12 im erfindungsgemässen Körper und in der damit gebildeten Durchflussküvettenanordnung als ein Zulauf auf einem tiefen Niveau der dreidimensionalen Struktur des Körpers 11 angeordnet, und dieser Zulauf 12 hat nur eine niedrige, trichterförmigen Einlassumrandung, so dass jetzt dieser äussere Einlass zur Aussparung 13 ohne einen dazwischen liegenden, relativ langen Kanal (siehe Fig. 25, die der Fig. 2 der PCT/EP 00/12668 entspricht) in den Inneneinlass 14 der Durchflussküvette übergeht. Diese Ausführung des Zulaufs 12 hat folgende Vorteile:
a) Die Durchflussküvetten können leichter und mit Pipettenspitzen grösseren Durchmessers befüllt werden als in der früheren Version gemäss Fig. 25 (Ausführung gemäss Fig. 2 der PCT/EP 00/12668). Es können also insbesondere reguläre, kommerziell erhältliche Spitzen gemäss Industriestandard verwendet werden.
b) Die erforderlichen Füllvolumina bzw. Probenvolumina zur Befüllung können deutlich gesenkt werden.

Wie unter anderem aus Fig. 6 ersichtlich, weist der Körper eine Abgrenzungswand 16 auf, die zur Abgrenzung des Reservoirs 15 von der Einlassöffnung 14 jeder Küvette dient und um diese Einlassöffnung angeordnet ist.

Die Materialien für die Grundplatte, den damit zusammengebrachten Körper und einer gegebenenfalls verwendeten zusätzlichen Deckplatte müssen den Anforderungen für den jeweils geplanten Einsatz der Anordnung genügen. In Abhängigkeit von der spezifischen Applikation betreffen diese Anforderungen chemische und physikalische Beständigkeit, zum Beispiel gegen saure oder basische Medien, Salze, Alkohole oder Detergentien als Bestandteile von wässrigen Lösungen, oder Formamid, Temperaturbeständigkeit (zum Beispiel zwischen -30°C und 100°C), möglichst ähnliche thermische Ausdehnungskoeffizienten von Grundplatte und damit zusammengebrachtem Körper, optische Eigenschaften (z. B. bezüglich Fluoreszenzfreiheit, Reflexionsvermögen), mechanische Bearbeitbarkeit etc. Es wird bevorzugt, dass das Material des mit der Grundplatte zusammengebrachten Körpers ausgewählt ist aus der Gruppe, die von form-, spritz- oder fräsbaren Kunststoffen, thermoplastischen Kunststoffen, Metallen, Silikaten, wie zum Beispiel Glas, Quarz oder Keramiken, gebildet wird. Ebenso kann das Material der zusätzlichen durchgehenden Deckplatte ausgewählt sein aus der Gruppe, die von form-, spritz- oder fräsbaren Kunststoffen, Metallen, Silikaten, wie zum Beispiel Glas, Quarz oder Keramiken, gebildet wird. Auch bezüglich der Grundplatte wird bevorzugt, dass das Material der Grundplatte Materialien umfasst aus der Gruppe, die von form-, spritz- oder fräsbaren Kunststoffen, thermoplastischen Kunststoffen, Metallen, Silikaten, wie zum Beispiel Glas, Quarz oder Keramiken, gebildet wird. Dabei können die genannten Komponenten (Grundplatte, damit zusammengefügter Körper, Deckplatte) jeweils aus einem einheitlichen Material bestehen oder auch eine Mischung oder schichtweise oder laterale Zusammenfügung verschiedener Materialien umfassen, wobei die Materialien sich gegenseitig ersetzen können.

Die Flächen des Körpers 11, welche den "Deckel" und die Seitenwände der Probenbehältnisse bilden, sollten möglichst wenig reflektierend sein, um störenden Einfluss von dort reflektiertem Anregungslicht möglichst gering zu halten.

In der vorgesehenen Benutzungsweise der Anordnung (sowohl für mögliche refraktive Messungen als auch für Fluoreszenzmessungen) wird das Anregungslicht i.a. immer durch die Grundplatte hindurch eingestrahlt und das Messlicht (bei Anregungswellenlänge und/oder bei Fluoreszenz- bzw. Lumineszenzwellenlänge) auf der gleichen Seite erfasst, von der die Lichteinstrahlung erfolgte. Daher wird das Material der Grundplatte bevorzugt so gewählt, dass diese zumindest bei der einen oder den mehreren eingesetzten Anregungswellenlängen und gegebenenfalls auch bei entsprechenden Lumineszenzwellenlängen transparent ist.

Für die Anwendungen mit Lumineszenzdetektion sollte die Grundplatte auch möglichst frei von Eigenlumineszenz sein. Die Grundplatte kann aus einem einheitlichen Material bestehen (z. B. als Plättchen aus Glas oder entsprechend transparentem Kunststoff) und dabei zum Beispiel in einer klassischen Auflichtanordnung mit Anregungslicht angestrahlt werden. Sie kann auch ein Mehrschichtsystem sein (zum Beispiel ausgebildet als ein Dünnschichtwellenleiter). Die Lichteinstrahlung kann auch dann in der gerade beschriebenen klassischen Anordnung erfolgen. Bevorzugt wird, dass die Grundplatte ein (Dünn-)Schichtwellenleiter ist, mit den in der PCT/EP 00/12668 beschriebenen Eigenschaften und Ausführungsformen.

Folgende Materialien sind zum Beispiel für die Herstellung der Grundplatte 31 geeignet: form-, spritz- oder fräsbare Kunststoffe, thermoplastische Kunststoffe (bevorzugte Herstellung mittels "Injection Molding"), Metalle, Silikate, wie zum Beispiel Glas, Quarz oder Keramiken.

Für alle Anwendungen, bei denen ein Anregungslicht durch die Grundplatte 31 hindurch in Richtung von darauf nachzuweisenden Molekülen eingestrahlt wird, wird das Material der Grundplatte so gewählt, dass die Grundplatte zumindest bei der Wellenlänge dieses Anregungslichts weitgehend transparent ist.

In einer Ausführungsform, bei der die Grundplatte 31 als optischer Schichtwellenleiter dient, hat die Grundplatte zum Beispiel die Struktur gemäss Fig. 27, die eine im wesentlichen auf die Grundplatte beschränkte Querschnittsteilansicht zeigt. In der Ausführungsform gemäss Fig. 27 ist die Grundplatte als ein optischer Schichtwellenleiter mit darauf immobilisierten biologischen oder biochemischen oder synthetischen Erkennungselementen ausgebildet. Gemäss Fig. 27 umfasst dieser Schichtwellenleiter Schichten (a), (b) und (b'). Mit dem Bezugszeichen (g) sind in Fig. 27 die Begrenzungen einer Durchflussküvette bezeichnet, welche durch Zusammenbringen der Grundplatte mit einem Körper erzeugt wird. Das Bezugszeichen (g) entspricht daher dem Bezugszeichen 11 in den Figuren 1 bis 15.

Auf einer zumindest in einem Teil des sichtbaren oder nahen infraroten Spektrums transparenten Schicht (b) ist zunächst eine dünne Zwischenschicht (b') und anschliessend eine Schicht (a) aufgebracht, deren Brechungsindex grösser als die Brechungsindices der Schichten (b) und (b') ist. Auch die Schichten (a) und (b') sind mindestens in einem Teil des sichtbaren oder nahen infraroten Spektrums optisch transparent. In der Schicht (b) sind Gitterstrukturen (c) und (c') als Reliefgitter ausgebildet, welche bei der Aufbringung der darüber befindlichen Schichten in diese übertragen werden. Auf die Schicht (a) wird dann eine Haftvermittlungsschicht (f) aufgebracht, welche die Haftung zu immobilisierender biologischer oder biochemischer oder synthetischer Erkennungselemente verbessern kann. In dieser Ausführungsform sind diese Erkennungselemente in räumlich getrennten Messbereichen (d) immobilisiert, welche in dieser Ausführungsform sowohl auf als auch zwischen den Gitterstrukturen (c) und (c') angeordnet sind. In der Ausführungsform gemäss Fig. 27 wird abschliessend die Grundplatte mit dem Körper (g) zusammengebracht, welcher dem Körper 11 in den Figuren 1 bis 15 entspricht.

Die Schicht (a) der Grundplatte ist z.B. eine hochbrechende Metalloxidschicht auf der Schicht (b).

Beispiele für Materialien für die zweite optisch transparente Schicht b sind:
- Silikate, z. B. Glas oder Quarz, oder
- ein transparenter thermoplastischer oder spritzbarer Kunststoff, bevorzugt aus der Gruppe, die von Polycarbonat, Polyimid, Polymethylmethacrylat oder Polystyrol gebildet wird.

### 4) ZWEITES AUSFÜHRUNGSBEISPIEL EINER DURCHFLUSSKÜVETTENANORDNUNG

Diese zweite erfindungsgemässe Anordnung von Durchflussküvetten wird durch Zusammenfügung von einem Körper, der gemäss dem oben unter 2) beschriebenen zweiten Ausführungsbeispiel nach einer der beiden dort beschriebenen Ausführungsformen eines solchen Körpers zur Bildung einer matrixartigen Anordnung von Durchflussküvetten geeignet ist, und einer Grundplatte gebildet, die z.B. biologische Erkennungselemente trägt. Die Grundplatte und der Körper werden zum Beispiel durch Kleben oder Klippen zusammengefügt. Die so gebildete Durchflussküvettenanordnung kann in einem Analysensystem entweder als selbständige Einheit, d.h. ohne Verwendung eines Trägers, oder mit einem Träger verwendet werden, der wenigstens eine Ausnehmung zur Aufnahme der Durchflussküvettenanordnung aufweist.

Auch in diesem Ausführungsbeispiel ist die Grundplatte 31 vorzugsweise dazu geeignet, als Wellenleiter zu dienen.

Für die Herstellung der Komponenten der Durchflussküvettenanordnung sind die gleichen Materialien verwendbar, die oben unter 3) angegeben sind.

### 5) ERSTES AUSFÜHRUNGSBEISPIEL EINES TRÄGERS FÜR EINEN KÖRPER ZUR BILDUNG EINER DURCHFLUSSKÜVETTENANORDNUNG

Ein erfindungsgemässer Träger 41 für einen Körper 11 zur Bildung einer geradlinigen Reihe - also einer eindimensionalen Anordnung - von Durchflussküvetten ist in den Figuren 16-23 dargestellt. Der Träger 41 weist eine Vielzahl von Ausnehmungen 42 auf, deren Form und Abmessungen zur äusseren Form des Körpers 11 so angepasst ist, dass eine genaue Positionierung des Körpers 11 in der Ausnehmung 42 ermöglicht wird.

Die Aussenabmessungen des Trägers entsprechen vorzugsweise der SBS-Norm. Der Träger hat daher die Abmessungen einer Standard-Mikrotiterplatte, d.h. ca. 85 mm x 128 mm.

Der Träger kann zum Einmalgebrauch oder als wiederverwendbare Komponente ausgestaltet sein, aus dem die darin eingesetzten Durchflussküvettenanordnungen durch Zusammendrücken der Schnapphaken S gelöst werden können. Alternativ können die Schnapphaken auch durch Druck von unten mittels eines entsprechend gestalteten Werkzeugs gelöst werden.

Der Träger kann z.B. bis zu 5 Durchflussküvettenanordnungen aufnehmen, die z.B. je 6 Durchflussküvetten enthalten.

Auf der Oberseite des Trägers 41 befinden sich in den äusseren Ecken 3 gleichartige (quadratische) Erhebungen 43, 44, 45 und eine weitere davon verschiedene Erhebung 46 (siehe Fig. 16), denen entsprechende Ausnehmungen 63, 64, 65, 66 in der Unterseite des Trägers 41 entsprechen (siehe Fig. 17). Diese Erhebungen und Ausnehmungen ermöglichen, mehrere Träger übereinander zu stapeln und gleichzeitig die Unterseiten der in den Körper 11 einzuklebenden Grundplatten 31 (Glasplättchen, Wellenleiter-Plättchen oder Sensorplattformen) kontaktfrei von der Auflage zu halten, so dass eine Verschmutzung der Unterseiten der Grundplatten vermieden wird.

An den Längsseiten des Trägers 41 befinden sich zwei Ausnehmungen unterschiedlicher Grösse, welche ein falsches Einsetzen des Trägers in die Eingabevorrichtung eines automatisierten Analyse-Systems verhindern.

Nach Einlegen des Trägers 41 in die Eingabevorrichtung fährt ein Aufnahmesteg mit zu den beiden Ausnehmungen komplementären Erhebungen unter den Träger, um ihn dann geringfügig anzuheben. Parallel zu den Längsseiten des Trägers verlaufen in der Eingabevorrichtung zwei Lichtschranken. Wenn der Träger mit einer unrichtigen Orientierung in die Eingabevorrichtung eingelegt wird, wird dessen Seite mit der kleineren seitlichen Aussparung zu stark angehoben. Dieses wird durch eine entsprechende Lichtschranke detektiert, was eine Verweigerung der Aufnahme des Trägers in das automatische Analyse-System zur Folge hat.

Folgende Materialien sind für die Herstellung des Trägers 41 geeignet:
- form-, spritz- oder fräsbare Kunststoffe, thermoplastische Kunststoffe (bevorzugte Herstellung mittels "Injection Molding"), Metalle, Silikate, wie zum Beispiel Glas, Quarz oder Keramiken,

Beispiele für die Materialien zur Herstellung des Trägers 41 sind insbesondere:
- Polycarbonat (PC), z. B. ungefüllt, schwarz eingefärbt,
- Polybutylenterephthalat (PBT),z. B. glaskugelgefüllt, schwarz eingefärbt,
- Polyphenylsulfid (PPS), glas/mineralgefüllt, schwarz eingefärbt,
- "ABS" (Acrylnitril/Butadien/Styrol-Pfropfcopolymer).

Zur Verminderung von Reflexionen ist es vorteilhaft, wenn der Träger schwarz eingefärbt ist.

### 6) ZWEITES AUSFÜHRUNGSBEISPIEL EINES TRÄGERS FÜR EINEN KÖRPER ZUR BILDUNG EINER DURCHFLUSSKÜVETTENANORDNUNG

Dieses zweite Ausführungsbeispiel eines Trägers dient zur Aufnahme von wenigstens einem Körper gemäss 2) oben, d.h. einem Körper zur Bildung einer zweidimensionalen, matrixartigen Anordnung von Durchflussküvetten. Dieses zweite Ausführungsbeispiel eines Trägers weist wenigstens eine Ausnehmung auf, deren Form und Abmessungen zur äusseren Form des aufzunehmenden Körpers so angepasst ist, dass sie eine genaue Positionierung des Körpers in der Ausnehmung ermöglicht.

Für die Herstellung des Trägers sind die gleichen Materialien verwendbar die oben unter 6) angegeben sind.

### 7) ERSTES AUSFÜHRUNGSBEISPIEL EINER VON EINEM TRÄGER GETRAGENEN DURCHFLUSSKÜVETTENANORDNUNG

Dieses Ausführungsbeispiel einer Durchflussküvettenanordnung enthält eine oder mehrere je in einer Aufnahmeöffnung 42 eines Trägers 41 gemäss Figuren 16-23 eingesetzte Durchflussküvettenanordnungen wie diejenige, die oben unter 3) anhand der Figuren 8-15 beschrieben ist.

Die Grundplatte 31 und der Körper 11 werden zum Beispiel durch Kleben zusammengefügt. Als Alternative dazu wird in einer Variante die Grundplatte 31 zwischen dem Körper 11 und dem Träger 41 eingeklemmt, und mit dem Körper ausschliesslich mittels einer Kraft zusammengefügt, die durch Zusammensetzung des Körpers 11 und des Trägers 41 erzeugt wird.

In der soeben erwähnten Variante wird die Grundplatte wie folgt gehalten:

Auf der Unterseite des Trägers 41 befinden sich, umlaufend um die Aufnahmeöffnungen, dünne (z. B. 0.3 mm starke) Tragestege, so dass die (auf ihrer Oberseite) mit den biologischen oder biochemischen oder synthetischen Erkennungselementen versehenen Grundplatten 31 (z.B. Glasplättchen, Wellenleiterplättchen, Sensorplattformen) zunächst in den Träger 41 eingelegt werden können. Erst dann werden die Körper 11, mit integrierten Dichtlippen oder O-Ringen (z. B. aus elastischem Kunststoff), welche die in Fig. 7 gezeigten Nuten 21 enthalten können, in den Träger 41 mit z.B. widerhakenartigen Halterungen derart eingefügt, dass zwischen den Körpern 11 und der Grundplatte 31 ein Andruck definierter Stärke erzeugt wird, so dass eine gegenseitige fluidische Abdichtung der mit der Grundplatte 31 zusammen erzeugten Durchflussküvette bewirkt wird.

Für diese Variante geeignete Körper 11, bestehend aus starren und elastischen Kunststoffteilen, werden vorzugsweise in einem 2-Komponenten-Spritzgussverfahren hergestellt. Alternativ kann diese Variante einen entsprechend gestalteten starren Kunststoffkörper und in entsprechende Ausnehmungen des Körpers einzulegende Dichtungsringe umfassen. Eine derartige Ausführungsform ermöglicht es insbesondere auch, dass die Immobilisierung der biologischen oder biochemischen oder synthetischen Erkennungselemente (beispielsweise durch "Spotten") auf den Grundplatten 31 erst vor Ort durch den Kunden durchgeführt wird.

Für den Fall der Herstellung des Körpers 11 durch ein 2-Komponenten-Spritzgussverfahren sind die Plastikmaterialien für die starren Komponenten wie vorgenannt. Für die zweite elastische Komponente, welche mit der Grundplatte dichtend zusammengebracht wird, sind bevorzugte Materialien: thermoelastische Kunststoffe (TPE), z.B. Styrolethylenbutadienstyrol (SEBS), Silicone/Silikon, und Elastomere (Gummi).

### 8) ZWEITES AUSFÜHRUNGSBEISPIEL EINER VON EINEM TRÄGER GETRAGENEN DURCHFLUSSKÜVETTENANORDNUNG

Dieses Ausführungsbeispiel einer Durchflussküvettenanordnung enthält wenigstens eine in einer Aufnahmeöffnung eines Trägers gemäss 6) oben eingesetzte Durchflussküvettenanordnung wie diejenige, die oben unter 4) beschrieben ist.

Alternativ hierzu kann die Durchflussküvettenanordnung so geformt sein, dass sie eine selbständige Einheit bildet, die keinen Träger benötigt, um in einen Analysensystem verwendet zu werden.

Eine solche Durchflussküvettenanordnung kann z.B. 96 Durchflussküvetten oder mehr umfassen, z.B. 384 oder 1536 Durchflussküvetten, die auf dem gleichen Footprint angeordnet sind, oder auch Arrays mit beliebigen Abmessungen.

Die Grundplatte und der Körper werden zum Beispiel durch Kleben oder Klippen zusammengefügt. Als Alternative dazu wird in einer Variante die Grundplatte zwischen dem Körper nach einer Variante gemäss Ausführungsbeispiel 7 und dem Träger eingeklemmt, und mit dem Körper ausschliesslich mittels einer Kraft zusammengefügt, die durch Zusammensetzung des Körpers und des Trägers erzeugt wird.

### 9) BEISPIELE VON VERFAHREN, DIE MIT DEN OBEN BESCHRIEBENEN DURCHFLUSSKÜVETTENANORDNUNGEN DURCHFÜHRBAR SIND

Der Einfachheit halber, werden die folgenden Absätze von 1 bis 18 durchnummeriert und Wendungen der Art "Verfahren gemäss N1-N2" verwendet, worunter "Verfahren gemäss einem der Absätze N1 bis N2" zu verstehen ist.

Unter anderem sind folgende Verfahren mit den oben beschriebenen Durchflussküvettenanordnungen durchführbar:
9.1) Verfahren zum Nachweis eines oder mehrerer Analyten in einer oder mehreren flüssigen Proben mittels einer Durchflussküvettenanordnung, wobei den Probenbehältnissen Proben- und gegebenenfalls weitere Reagensflüssigkeiten zugeführt werden und diese in ein mit einer Durchflussküvette fluidisch verbundenes Reservoir, als Bestandteil besagter Probenbehältnisse, austreten können.
9.2) Verfahren gemäss 9.1), wobei auf der Grundplatte besagter Anordnung biologische oder biochemische oder synthetische Erkennungselemente zum Nachweis eines oder mehrerer Analyten immobilisiert sind, Anregungslicht zu den Messbereichen auf besagter Grundplatte geleitet wird und das von besagten Messbereichen ausgehende Licht mit mindestens einem Detektor erfasst wird.
9.3) Verfahren gemäss 9.2), wobei die Grundplatte einen durchgehenden oder in einzelne Bereiche aufgeteilten optischen Wellenleiter umfasst, Anregungslicht über ein optisches Koppelelement in besagten optischen Wellenleiter geleitet wird und mit einem oder mehreren Detektoren Messlicht von den Messbereichen erfasst wird, welche in optischer Wechselwirkung mit besagtem optischem Wellenleiter stehen.
9.4) Verfahren gemäss 9.3), wobei besagter optischer Wellenleiter als optischer Schichtwellenleiter ausgebildet ist mit einer ersten optisch transparenten Schicht (a) auf einer zweiten optisch transparenten Schicht (b) mit niedrigerem Brechungsindex als Schicht (a), wobei weiterhin Anregungslicht mithilfe einer oder mehrerer Gitterstrukturen, welche in der optisch transparenten Schicht (a) ausgeprägt sind, in die optisch transparente Schicht (a) eingekoppelt und zu darauf befindlichen Messbereichen (d) als geführte Welle geleitet wird, und wobei weiterhin die im evaneszenten Feld besagter geführter Welle erzeugte Lumineszenz von lumineszenzfähigen Molekülen mit einem oder mehreren Detektoren erfasst und die Konzentration eines oder mehrerer Analyten aus der Intensität dieser Lumineszenzsignale bestimmt wird.
9.5) Verfahren gemäss 9.4), wobei (1) die isotrop abgestrahlte Lumineszenz oder (2) in die optisch transparente Schicht (a) eingekoppelte und über die Gitterstruktur (c) ausgekoppelte Lumineszenz oder Lumineszenzen beider Anteile (1) und (2) gleichzeitig gemessen werden.
9.6) Verfahren gemäss 9.4) - 9.5), wobei zur Erzeugung der Lumineszenz ein Lumineszenzfarbstoff oder lumineszentes Nanopartikel als Lumineszenzlabel verwendet wird, das bei einer Wellenlänge zwischen 300 nm und 1100 nm angeregt werden kann und emittiert.
9.7) Verfahren gemäss 9.6), wobei das Lumineszenzlabel an den Analyten oder in einem kompetitiven Assay an einen Analogen des Analyten oder in einem mehrstufigen Assay an einen der Bindungspartner der immobilisierten biologischen oder biochemischen oder synthetischen Erkennungselementen oder an die biologischen oder biochemischen oder synthetischen Erkennungselemente gebunden ist.
9.8) Verfahren gemäss 9.6) - 9.7), wobei ein zweites oder noch weitere Lumineszenzlabel mit gleicher oder unterschiedlicher Anregungswellenlänge wie das erste Lumineszenzlabel und gleicher oder unterschiedlicher Emissionswellenlänge verwendet werden.
9.9) Verfahren gemäss 9.8), wobei das zweite oder noch weitere Lumineszenzlabel bei der gleichen Wellenlänge wie der erste Lumineszenz-Farbstoff angeregt werden kann, aber bei anderen Wellenlängen emittieren.
9.10) Verfahren gemäss 9.8), wobei die Anregungsspektren und Emissionsspektren der eingesetzten Lumineszenzfarbstoffe nur wenig oder gar nicht überlappen.
9.11) Verfahren gemäss 9.8), wobei zum Nachweis des Analyten Ladungs- oder optischer Energietransfer von einem als Donor dienenden ersten Lumineszenzfarbstoff zu einem als Akzeptor dienenden zweiten Lumineszenzfarbstoff verwendet wird.
9.12) Verfahren gemäss 9.4) - 9.11), wobei neben der Bestimmung einer oder mehrerer Lumineszenzen Änderungen des effektiven Brechungsindex auf den Messbereichen bestimmt werden.
9.13) Verfahren gemäss 9.4) - 9.12), wobei die einen oder mehreren Lumineszenzen und/oder Bestimmungen von Lichtsignalen bei der Anregungswellenlänge polarisationsselektiv vorgenommen werden.
9.14) Verfahren gemäss 9.4) - 9.13), wobei die einen oder mehreren Lumineszenzen bei einer anderen Polarisation als der des Anregungslichts gemessen werden.
9.15) Verfahren gemäss 9.4) - 9.14) zur gleichzeitigen oder sequentiellen, quantitativen oder qualitativen Bestimmung eines oder mehrerer Analyten aus der Gruppe von Antikörpern oder Antigenen, Rezeptoren oder Liganden, Chelatoren oder "Histidin-tag-Komponenten", Oligonukleotiden, DNA- oder RNA-Strängen, DNA- oder RNA-Analoga, Enzymen, Enzymcofaktoren oder Inhibitoren, Lektinen und Kohlehydraten.
9.16) Verfahren gemäss 9.4) - 9.15), wobei die zu untersuchenden Proben natürlich vorkommende Körperflüssigkeiten wie Blut, Serum, Plasma, Lymphe oder Urin oder Gewebeflüssigkeiten oder Eigelb sind.
9.17) Verfahren gemäss 9.4) - 9.15), wobei die zu untersuchende Probe eine optisch trübe Flüssigkeit, Oberflächenwasser, ein Boden- oder Pflanzenextrakt, eine Bio- oder Syntheseprozessbrühe ist.
9.18) Verfahren gemäss 9.4) - 9.17), wobei die zu untersuchenden Proben aus biologischen Gewebeteilen entnommen sind.

### 10) BEISPIELE VON VERWENDUNGEN DER OBEN BESCHRIEBENEN ANORDNUNGEN UND VERFAHREN

Die oben beschriebenen Körper, Träger, Anordnungen von Durchflussküvetten und Verfahren sind für folgende Verwendungen geeignet:

Verwendungen zu quantitativen oder qualitativen Analysen zur Bestimmung chemischer, biochemischer oder biologischer Analyten in Screeningverfahren in der Pharmaforschung, der Kombinatorischen Chemie, der Klinischen und Präklinischen Entwicklung, zu Echtzeitbindungsstudien und zur Bestimmung kinetischer Parameter im Affinitätsscreening und in der Forschung, zu qualitativen und quantitativen Analytbestimmungen, insbesondere für die DNA- und RNA-Analytik und die Bestimmung von genomischen oder proteomischen Unterschieden im Genom, wie beispielsweise Einzelnukleotid-Polymorphismen, zur Messung von Protein-DNA-Wechselwirkungen, zur Bestimmung von Steuerungsmechanismen für die mRNA-Expression und für die Protein(bio)synthese, für die Erstellung von Toxizitätsstudien sowie für die Bestimmung von Expressionsprofilen, insbesondere zur Bestimmung von biologischen und chemischen Markerstoffen, wie mRNA, Proteinen, Peptiden oder niedermolekularen organischen (Boten-)Stoffen, sowie zum Nachweis von Antikörpern, Antigenen, Pathogenen oder Bakterien in der pharmazeutischen Produktforschung und -entwicklung, der Human- und Veterinärdiagnostik, der Agrochemischen Produktforschung und -entwicklung, der symptomatischen und präsymptomatischen Pflanzendiagnostik, zur Patientenstratifikation in der pharmazeutischen Produktentwicklung und für die therapeutische Medikamentenauswahl, und/oder zum Nachweis von Pathogenen, Schadstoffen und Erregern, insbesondere von Salmonellen, Prionen, Viren und Bakterien, insbesondere in der Lebensmittel- und Umweltanalytik.

### Bezugszeichenliste

- a: Schicht
- b: Schicht
- b': Zwischenschicht
- c: Gitterstruktur
- c': Gitterstruktur
- d: Messbereich
- f: Haftvermittlungsschicht
- g: Begrenzung der Durchflusszelle
(entspricht Bezugszeichen 6)
- 1: Zulauf
- 2: Ablauf
- 3: Ausnehmung
- 4: Grundplatte
- 5: Reservoir
- 6: Körper
- 7: Durchflussküvettenanordnung (Einsatzblock)
- 8: Träger ("Metaträger")
- 9: Einlassöffnungen
- 10:
- 11: Körper
- 12: Zulauf
- 13: Aussparung
- 14: Einlassöffnung der Aussparung 13
- 15: Reservoir
- 16: Abgrenzungswand
- 17: Auslassöffnung der Aussparung 13
- 18: Position einer Durchflussküvette
- 19:
- 20:
- 21: Nut (umlaufende Nut)
- 22: Anschlag
- 23: Anschlag
- 24: Anschlag
- 25: Schutzwinkel
- 26: Schutzwinkel
- 27: Schutzwinkel
- 28:
- 29: Steg (umlaufender Steg)
- 30:
- 31: Grundplatte
- 32:
- 33:
- 34:
- 35:
- 36:
- 37:
- 38:
- 39:
- 40:
- 41: Träger
- 42: Ausnehmung/Aufnahmeöffnung
- 43: Erhebung
- 44: Erhebung
- 45: Erhebung
- 46: Erhebung
- 47:
- 48:
- 49:
- 50:
- 51: Feder
- 52: Anschlag
- 53: Feder
- 54: Anschlag
- 55: Feder
- 56: Anschlag
- 57: Auflagepunkt
- 58: Auflagepunkt
- 59: Auflagepunkt
- 60:
- 61: Schnapphaken
- 62: Schnapphaken
- 63: Ausnehmung
- 64: Ausnehmung
- 65: Ausnehmung
- 66: Ausnehmung
- 67:
- 68:
- 69:
- 70:
- 71:
- 72:
- 73:
- 74:
- 75:
- 76:
- 77:
- 78:
- 79:

## Patentansprüche

1. Körper (11) zur Bildung einer Anordnung von Durchflussküvetten durch Zusammenfügung des Körpers (11) mit einer Grundplatte (31), welcher Körper (11) **dadurch gekennzeichnet ist, dass** er
mindestens ein Durchflussküvettenteil (18) mit einem Zulauf (12) und einem Ablauf (17) umfasst,
wobei der Durchflussküvettenteil (18) so ausgebildet ist, dass beim Zusammenfügen des Körpers (11) mit der Grundplatte (31) ein Innenraum (13) mit einer Einlassöffnung (14) und mit einer Auslassöffnung (17) gebildet wird, welcher Innenraum (13) den Zulauf (12) und den Ablauf (17) fluidisch verbindet, und
wobei der Zulauf (12) im Wesentlichen trichterförmig ausgebildet ist und nahe bei der Grundplatte (31) in die Einlassöffnung (14) übergeht, so dass bei der Befüllung der Durchflussküvette (11,31) insbesondere mittels einer Pippette, die Spitze der Pippette nahe zur Grundplatte (31) geführt werden kann.

2. Körper gemäss Anspruch 3, **dadurch gekennzeichnet, dass** der Durchflussküvettenteil (18) eine Fläche aufweist, welche einen Teil des Innenraums (13) bildet und welche mit mindestens einer Nut (21) versehen ist, wobei die Einlassöffnung (14) und Auslassöffnung (17) vorzugsweise in der Nut (21) liegen.

3. Körper gemäss einem der Ansprüche 1-2, **dadurch gekennzeichnet, dass** er eine äussere Form hat, die in eine Aufnahmeöffnung (42) eines Trägers (41) passt.

4. Erste Anordnung von Durchflussküvetten, welche durch Zusammenfügung von
einem Körper (11) gemäss Anspruch 3 und
einer Grundplatte (31)
gebildet ist.

5. Erste Anordnung von Durchflussküvetten gemäss Anspruch 4, **dadurch gekennzeichnet, dass** die Grundplatte (31) biologische und/oder biochemische und/oder synthetische Erkennungselemente trägt.

6. Erste Anordnung von Durchflussküvetten gemäss Anspruch 4 oder 5, **dadurch gekennzeichnet, dass** die Grundplatte (31) dazu geeignet ist, als Wellenleiter zu dienen.

7. Dritte Anordnung von Durchflussküvetten, **dadurch gekennzeichnet, dass** sie
einen Körper (11) gemäss einem der Ansprüche 1-2,
einen Träger (41) zur Aufnahme von wenigstens einer ersten Anordnung von Durchflussküvetten gemäss einem der Ansprüche 4-6, der
wenigstens eine Ausnehmung (42) aufweist, deren Form und Abmessungen zur äusseren Form des Körpers (11) so angepasst sind, dass eine genaue Positionierung des Körpers (11) in der Ausnehmung (42) ermöglicht wird, und
eine Grundplatte (31) umfasst, die zwischen dem Körper (11) und dem Träger (41) eingeklemmt ist.

8. Dritte Anordnung von Durchflussküvetten gemäss Anspruch 7, **dadurch gekennzeichnet, dass** die Grundplatte (31) ausschliesslich durch den Andruck festgehalten wird, der durch Zusammensetzen des Körpers (11) und des Trägers (41) erzeugt wird.

9. Dritte Anordnung von Durchflussküvetten gemäss Anspruch 7 oder 8, **dadurch gekennzeichnet, dass** sie Dichtmittel umfasst zur fluidischen Abdichtung des Innenraums (13).

10. Verwendung eines Körpers gemäss einem der Ansprüche 1-2, einer Anordnung von Durchflussküvetten gemäss einem der Ansprüche 4-6, oder 7-9
zum Nachweis eines oder mehrerer Analyten in einer Probeflüssigkeit.

11. Verwendung eines Körpers gemäss einem der Ansprüche 1-2, einer Anordnung von Durchflussküvetten gemäss einem der Ansprüche 4-6, oder 7-9
zu quantitativen oder qualitativen Analysen zur Bestimmung chemischer, biochemischer oder biologischer Analyten in Screeningverfahren in der Pharmaforschung, der Kombinatorischen Chemie, der Klinischen und Präklinischen Entwicklung,
zu Echtzeitbindungsstudien und zur Bestimmung kinetischer Parameter im Affinitätsscreening und in der Forschung,
zu qualitativen und quantitativen Analytbestimmungen,
insbesondere für die DNA- und RNA-Analytik und die Bestimmung von genomischen oder proteomischen Unterschieden im Genom, wie beispielsweise Einzelnukleotid-Polymorphismen, zur Messung von Protein-DNA-Wechselwirkungen,
zur Bestimmung von Steuerungsmechanismen für die m-RNA-Expression und für die Protein(bio)synthese,
für die Erstellung von Toxizitätsstudien,
für die Bestimmung von Expressionsprofilen,
insbesondere zur Bestimmung von biologischen und chemischen Markerstoffen, wie mRNA, Proteinen, Peptiden oder niedermolekularen organischen (Boten-)Stoffen,
zum Nachweis von Antikörpern, Antigenen, Pathogenen oder Bakterien in der pharmazeutischen Produktforschung und -entwicklung, der Human- und Veterinärdiagnostik, der Agrochemischen Produktforschung und -entwicklung, der symptomatischen und präsymptomatischen Pflanzendiagnostik,
zur Patientenstratifikation in der pharmazeutischen Produktentwicklung und für die therapeutische Medikamentenauswahl und/oder
zum Nachweis von Pathogenen, Schadstoffen und Erregern, insbesondere von Salmonellen, Prionen, Viren und Bakterien, insbesondere in der Lebensmittel- und Umweltanalytik.
